# EUROPEAN PATENT APPLICATION

(11) **EP 4 691 682 A1**
(43) Date of publication of application: **11.02.2026**
(21) Application number: 23945639.5
(22) Date of filing: 02.11.2023
(51) Int. Cl.: B23K 37/00, B23K 31/02, G01N 21/25, H01M 50/528

(54) **STRUCTURAL MEMBER AND PREPARATION METHOD THEREFOR, BATTERY CELL, BATTERY, AND ELECTRICAL DEVICE**

(30) Priority: 17.07.2023 CN 202310871172
(71) Applicant: Contemporary Amperex Technology Co., Limited, Ningde, Fujian 352100 (CN)
(72) Inventor: WU, Kai, Ningde, Fujian 352100 (CN); BAI, Xiangyun, Ningde, Fujian 352100 (CN); LI, Zhen, Ningde, Fujian 352100 (CN); WEN, Yuqian, Ningde, Fujian 352100 (CN)
(74) Representative: Ran, Handong
(86) International application number: PCT/CN2023/129405
(87) International publication number: WO 2025/015759

(57) **Abstract**

A structural member (1) and a preparation method therefor, a battery cell (10), a battery (100), and an electrical device. The structural member (1) is provided with a welding area (11) for welding with a target member (2). The welding area (11) comprises a first portion (111) and a second portion (112). The second portion (112) has a weaker capability to receive welding energy compared to the first portion (111), and the capability to receive welding energy refers to the depth of weld penetration formed at the welding location.

## Description

### CROSS-REFERENCE TO RELATED APPLICATIONS

This application claims priority to Chinese Patent Application (202310871172.5), filed on July 17, 2023 and entitled "STRUCTURAL MEMBER AND PREPARATION METHOD THEREOF, BATTERY CELL, BATTERY, AND ELECTRIC DEVICE", which is incorporated herein by reference in its entirety.

### TECHNICAL FIELD

This application relates to the field of battery technology, in particular, to a structural member, a battery cell, a battery, an electric device, a method for determining welding quality of a structural member and a target member, and a preparation method of a structural member.

### BACKGROUND

With the popularization and promotion of new energy vehicles, the charging and discharging performance and battery life of new energy vehicles have increasingly attracted attention. As a rechargeable battery, a traction battery serves as a power source for new energy vehicles and is widely used in the field of new energy vehicles.

A battery manufacturing process involves welding between components, and the components are prone to deformation and cracking during welding.

### SUMMARY

An embodiment of this application provides a structural member for penetration welding, a preparation method thereof, a battery cell, a battery, and an electric device. When the structural member is to be welded to a target member, the structural member is less likely to deform and crack, and a welded product exhibits high welding quality.

According to a first aspect, an embodiment of this application provides a structural member for penetration welding. The structural member includes a welding region to be welded to a target member. The welding region includes a first portion and a second portion. The second portion has a weaker ability to receive welding energy than the first portion, where the ability to receive welding energy refers to a depth of a weld penetration formed at a welding site.

In the above technical solution, the structural member includes a welding region, the welding region includes a first portion and a second portion, and the second portion has a weaker ability to receive welding energy than the first portion. With this configuration, the second portion can be used to preheat the first portion, the first portion achieves effective welding, and the structural member is less likely to deform when welded to the target member, and exhibits high welding quality.

Additionally, the above structural member can also serve as an intermediate product. This intermediate product, between a raw material and a standard product, can reduce the difficulty of preparing a standard product and facilitate the production of a standard product with the performance that the welding quality can be identified based on the color in appearance.

In some embodiments, the first portion has a first surface configured to receive welding energy, and the second portion protrudes from the first surface.

In the above technical solution, by increasing a thickness of the first portion, the ability of the second portion to receive welding energy is weakened. Thus, when positive defocus welding is employed and a welding device provides the same welding energy, a surface of the second portion receiving welding energy is closer to a laser source than the first surface, a spot area formed on the second surface is larger than a sport area formed on the first surface, the welding energy per unit area on the surface of the second portion receiving the welding energy is weaker than the welding energy per unit area on the first surface, and a weld penetration of a second weld mark formed in the second portion is less than a weld penetration of a first weld mark formed in the first portion.

In addition, by increasing the thickness of the second portion to weaken the ability of the second portion to receive welding energy, the first portion and the second portion can be made of the same material, further reducing preparation difficulty, facilitating production and manufacturing, and improving the production efficiency of the structural member.

In some embodiments, the first portion has a first surface configured to receive welding energy, the second portion includes a second surface configured to receive welding energy, and a roughness of the first surface is greater than a roughness of the second surface.

In the above technical solution, by making the roughness of the first surface greater than the roughness of the second surface, the ability of the second portion to receive welding energy is weaker than the ability of the first portion to receive welding energy.

In some embodiments, the second portion protrudes from the first surface.

In the above technical solution, the structural member is adjusted by increasing the thickness of the second portion and altering the roughness of the second portion, facilitating production and manufacturing. Additionally, the structural member is applicable to products imposing requirements on roughness.

In some embodiments, the first portion has a first surface configured to receive welding energy, the second portion has a second surface configured to receive welding energy, an area of the first surface is S₁, an area of the second surface is S₂, and 0.1 ≤ S₂/S₁ ≤ 0.4.

In the above technical solution, a proportion of the second surface in the entire welding region can be controlled within a specific range, such that the second portion can be used to identify welding quality after welding, with minimal impact on the connection stability between the structural member and the target member.

In some embodiments, a welding energy absorption rate of the first portion is greater than a welding energy absorption rate of the second portion.

In the above technical solution, by making the welding energy absorption rate of the first portion greater than the welding energy absorption rate of the second portion, the ability of the second portion to receive welding energy is weaker than the ability of the first portion to receive welding energy.

In some embodiments, a material of the first portion includes at least one of steel, aluminum, nickel, or copper.

In the above technical solution, the materials are readily available, facilitating production.

In some embodiments, the material of the second portion includes one of copper or aluminum.

In the above technical solution, the materials are readily available, facilitating production.

In some embodiments, the first portion surrounds a periphery of the second portion.

In the above technical solution, the first portion surrounding the periphery of the second portion facilitates production and manufacturing, and regions occupied by the first portion and the second portion are reduced, reducing occupation of size of the structural member.

According to a second aspect, an embodiment of this application provides a battery cell. The battery includes a target member and the structural member provided in any of the above embodiments. The target member is welded to the structural member.

In some embodiments, the battery cell includes an electrode terminal, a tab, and a current collecting member. The current collecting member is configured to connect the electrode terminal to the tab, where any two of the electrode terminal, the current collecting member, and the tab are respectively the target member and the structural member.

According to a third aspect, an embodiment of this application provides a battery including the battery cell provided in any embodiment according to the second aspect.

According to a fourth aspect, an embodiment of this application further provides a battery. The battery includes multiple battery cells and the structural member provided in the above embodiments, where the battery cell includes an electrode terminal, and the structural member is welded to the electrode terminal to achieve electrical connection of the multiple battery cells.

According to a fifth aspect, an embodiment of this application provides an electric device. The electric device includes the battery cells provided in the above embodiments, and/or the electric device includes the battery provided in the above embodiments, where the battery cell or the battery is configured to provide electrical energy.

According to a sixth aspect, an embodiment of this application provides a method for determining welding quality of a structural member and a target member. The structural member includes a welding region to be welded to the target member. The welding region includes a first portion and a second portion. The second portion has a weaker ability to receive welding energy than the first portion, where the ability to receive welding energy refers to a depth of a weld penetration formed at a welding site. The structural member and the target member are welded at the first portion and the second portion according to a first welding energy value to form a first weld mark in the first portion and a second weld mark in the second portion, where if a color of the second weld mark is a predetermined color, a weld penetration of the first weld mark is less than or equal to a thickness of the first portion.

In the above technical solution, the method for determining welding quality of a structural member and a target member allows for the determination of welding quality by observing whether a predetermined color appears in appearance, and the determining method is simple and highly effective.

According to a seventh aspect, an embodiment of this application provides a preparation method of a structural member for penetration welding, including:
providing a structural member, where the structural member includes a welding region to be welded to a target member; and
forming a first portion and a second portion in the welding region, where the second portion has a weaker ability to receive welding energy than the first portion.

In the above technical solution, the structural member and target member obtained by the preparation method can achieve high welding quality, and the structural member is less likely to deform during welding. The structural member 1 can also serve as an intermediate product. This intermediate product can reduce the manufacturing difficulty of a standard product capable of identifying the welding quality based on the appearance.

In some embodiments, the preparation method further includes: welding the structural member and the target member according to a first welding energy value to form a first weld mark through welding in the first portion, where a weld penetration of the first weld mark is greater than a thickness of the first portion; gradually reducing the welding energy value until the weld penetration of the first weld mark is equal to the thickness of the first portion, where when the weld penetration of the first weld mark is equal to the thickness of the first portion, the welding energy value is second welding energy; while forming a second weld mark at the second portion according to the second welding energy value, completing the preparation of the structural member after a color of the second weld mark reaches a predetermined color; and
while forming a second weld mark at the second portion according to the second welding energy value, if the color of the second weld mark does not reach the predetermined color, adjusting the ability of the second portion to receive welding energy; and completing the preparation of the structural member after the color of the second weld mark reaches the predetermined color when the second portion is welded according to the second welding energy value.

In the above technical solution, the above steps can be used to prepare an intermediate product into a standard product, and this standard product can achieve the identification of welding quality in appearance, improving the production efficiency.

In some embodiments, the method for adjusting the ability of the second portion to receive welding energy includes at least one of: changing a thickness of the second portion, changing a laser absorption rate of the second portion, or changing a roughness of the second portion.

### BRIEF DESCRIPTION OF DRAWINGS

To more clearly illustrate the technical solutions of the embodiments of this application, the drawings required for use in the embodiments will be briefly introduced below. It should be understood that the following drawings only show some embodiments of this application and should not be regarded as limiting the scope. For those of ordinary skill in the art, other related drawings can be obtained based on these drawings without creative effort.
FIG. 1 is a schematic structural diagram of a vehicle according to some embodiments of this application;
FIG. 2 is a schematic structural exploded view of a battery according to some embodiments of this application;
FIG. 3 is a schematic structural exploded view of a battery cell according to some embodiments of this application;
FIG. 4 is a schematic structural exploded view of a battery cell according to some other embodiments of this application;
FIG. 5 is a schematic diagram of a structural member according to some embodiments of this application;
FIG. 6 is a schematic diagram of a structural member according to some other embodiments of this application;
FIG. 7 is a partial cross-sectional view of welding of a structural member and a target member according to some embodiments of this application;
FIG. 8 is a partial cross-sectional view of incomplete welding of a structural member and a target member according to some embodiments of this application;
FIG. 9 is a schematic diagram of weld marks formed through welding in a welding region according to some embodiments of this application;
FIG. 10 is a schematic structural diagram of a battery according to some other embodiments of this application;
FIG. 11 is a flowchart of a method for determining welding quality of a structural member and a target member according to some embodiments of this application;
FIG. 12 is a flowchart of a preparation method of a structural member according to some embodiments of this application; and
FIG. 13 is a flowchart of a preparation method of a structural member according to some other embodiments of this application.

Reference signs:
1000. vehicle; 100. battery; 200. motor; 300. controller;
20. box; 21. first sub-box; 22. second sub-box; 23. accommodation space;
10. battery cell; 12. housing; 13. electrode assembly; 14. end cover; 15. electrode terminal; 16. current collecting member;
1. structural member; 11. welding region; 111. first portion; 1111. first surface; 111a. first weld mark; 112. second portion; 1121. second surface; 112a. second weld mark; and 2. target member.

### DESCRIPTION OF EMBODIMENTS

To make the objectives, technical solutions, and advantages of the embodiments of this application clearer, the technical solutions in the embodiments of this application will be clearly described below in conjunction with the drawings in the embodiments of this application. Obviously, the described embodiments are some rather than all of the embodiments of this application. Based on the embodiments in this application, all other embodiments obtained by those of ordinary skill in the art without creative effort fall within the scope of protection of this application.

Unless otherwise defined, all technical and scientific terms used in this application have the same meaning as commonly understood by those skilled in the technical field of this application; the terms used in the specification of this application are only for the purpose of describing specific embodiments and are not intended to limit this application; and the terms "include", "comprise", and any variations thereof in the specification, claims, and descriptions of the drawings of this application are intended to cover nonexclusive inclusion. The terms "first", "second", and the like in the specification, claims, or descriptions of the drawings of this application are used to distinguish between different objects rather than to describe a specific order or primary-secondary relationship.

Reference to "embodiment" in this application means that a specific feature, structure, or characteristic described in connection with the embodiment may be included in at least one embodiment of this application. The appearance of the phrase in various places in the specification does not necessarily refer to the same embodiment, nor is it an independent or alternative embodiment mutually exclusive with other embodiments.

In the description of this application, it should be noted that, unless otherwise explicitly specified or limited, the terms "mounting", "connection", "join", and "attachment" should be understood broadly, for example, it may be a fixed connection, a detachable connection, or an integral connection; and may be a direct connection, a connection through an intermediate medium, or an internal communication between two elements. For those of ordinary skill in the art, the specific meanings of the above terms in this application can be understood based on specific circumstances.

In the description of this application, it should be noted that, unless otherwise stated, "multiple" means two or more; orientation or positional relationships indicated by the terms "upper", "lower", "left", "right", "inner", "outer", and the like are only for the convenience of describing this application and simplifying the description, and do not indicate or imply that the referred apparatus or element must have a specific orientation, be constructed or operated in a specific orientation, and therefore should not be construed as limiting this application. Additionally, the terms "first", "second", "third", and the like are used for descriptive purposes only and should not be understood as indicating or implying relative importance. "Vertical" is not strictly vertical but within an allowable error range. "Parallel" is not strictly parallel but within an allowable error range.

The term "and/or" in this application is merely an association describing associated objects, indicating that three relationships may exist, for example, A and/or B may indicate the following three cases: only A is present, both A and B are present, or only B is present. Additionally, the character "/" in this application generally indicates an "or" relationship between the contextually associated objects.

In the embodiments of this application, the same reference signs denote the same components, and for brevity, detailed descriptions of the same components are omitted in different embodiments. It should be understood that the dimensions such as thickness, length, and width of various components in the embodiments of this application shown in the drawings, as well as the overall thickness, length, width, and other dimensions of the integrated apparatus, are for illustrative purposes only and should not constitute any limitation on this application.

The term "multiple" in this application refers to two or more (including two).

In this application, battery cells include, but are not limited to, lithium-ion secondary batteries, lithium-ion primary batteries, lithium-sulfur batteries, sodium-lithium-ion batteries, sodium-ion batteries, or magnesium-ion batteries. The shape of the battery cell includes, but is not limited to, a cylindrical shape, a flat shape, a cuboid shape, or other shapes. Battery cells include, but are not limited to, cylindrical battery cells, prismatic battery cells, and pouch battery cells based on packaging.

The battery mentioned in the embodiments of this application is a single physical module including one or more battery cells to provide higher voltage and capacity. For example, the battery mentioned in this application may include a battery module or a battery pack. The battery generally includes a box for encapsulating one or more battery cells. The box can reduce the possibility that liquids or other foreign objects outside the box are close to the battery cell and affect the charging or discharging of the battery cell.

The battery cell includes an electrode assembly and an electrolyte. The electrode assembly includes a positive electrode plate, a negative electrode plate, and a separator. The battery cell operates primarily by the movement of metal ions between the positive electrode plate and the negative electrode plate. The positive electrode plate includes a positive electrode current collector and a positive electrode active material layer, the positive electrode active material layer is applied on a surface of the positive electrode current collector, a portion of the positive electrode current collector not coated with the positive electrode active material layer protrudes from a portion of the positive electrode current collector coated with the positive electrode active material layer, and the portion of the positive electrode current collector not coated with the positive electrode active material layer serves as a positive electrode tab. Taking a lithium-ion battery as an example, the material of the positive electrode current collector may be aluminum, and the positive electrode active material may be lithium cobalt oxide, lithium iron phosphate, ternary lithium, lithium manganese oxide, or the like. The negative electrode plate includes a negative electrode current collector and a negative electrode active material layer. The negative electrode active material layer is applied on a surface of the negative electrode current collector, a portion of the negative electrode current collector not coated with the negative electrode active material layer protrudes from a portion of the negative electrode current collector coated with the negative electrode active material layer, and the portion of the negative electrode current collector not coated with the negative electrode active material layer serves as a negative electrode tab. The material of the negative electrode current collector may be copper, and the negative electrode active material may be carbon, silicon, or the like. To ensure that a large current can pass without fusing, there are multiple positive electrode tabs stacked together, and there are multiple negative electrode tabs stacked together. The material of the separator may be PP (polypropylene, polypropylene) or PE (polyethylene, polyethylene). Additionally, the electrode assembly may be a wound structure or a laminated structure, and the embodiments of this application are not limited thereto.

For a typical battery cell, to connect a tab of the electrode assembly to an electrode terminal on an end cover so as to enable electrical connection between the electrode assembly and the electrode terminal so that a battery terminal serves as a positive output electrode or a negative output electrode of the battery cell, and to facilitate the electrical connection between the tab of the electrode assembly and the end cover, an adapter (also referred to as a current collecting disc in cylindrical batteries, all referred to as a current collecting member hereinafter) is typically provided within a housing, and the current collecting component is connected to the electrode terminal and the tab of the electrode assembly (the tab is a full tab, connected to the current collecting disc after being flattened) to achieve the electrical connection between the electrode assembly and the electrode terminal.

During a cell manufacturing process, the current collecting member and the electrode terminal are typically welded through penetration welding. In a penetration welding process, materials to be welded need to be stacked and divided into an upper layer material (for example, the current collecting member is positioned on top) and a lower layer material (for example, the electrode terminal is positioned on bottom), and a surface of the upper layer material is heated to realize penetration welding of the upper layer material, to implement connection between the upper layer material and the lower layer material.

In a penetration welding process, sufficient welding energy is required for effective welding. The welding energy is usually high, and direct welding causes the upper layer material to be suddenly heated, leading to a rapid temperature rise in a welding region, which causes quality issues such as deformation and cracking of the upper layer material. If the provided welding energy is directly reduced, incomplete welding may occur, affecting the welding quality.

In view of this, an embodiment of this application provides a structural member for penetration welding. The structural member includes a welding region to be welded to a target member. The welding region includes a first portion and a second portion. The second portion has a weaker ability to receive welding energy than the first portion. The second portion serves to preheat the first portion, and when the second portion receives welding energy, the second portion is heated slowly, and the second portion transfers heat to the first portion after being heated, allowing the first portion to be heated slowly and have a specific initial temperature. During welding of the first portion, the first portion has a specific initial temperature, which helps to mitigate quality issues such as deformation and cracking of the upper layer material due to rapid temperature rise of the welding region.

The structural member described in this embodiment of this application is applicable to battery cells, batteries, electric devices using batteries or battery cells, power supply systems using battery cells or batteries, and other components used for penetration welding.

The battery cell and battery disclosed in the embodiments of this application can be used in, but not limited to, electric devices such as vehicles, ships, or aircraft.

An embodiment of this application provides an electric device using a battery as a power source. The electric device includes, but is not limited to, vehicles, mobile phones, portable devices, laptops, ships, spacecraft, electric toys, and electric tools. Vehicles may include fuel vehicles, gas vehicles, or new energy vehicles, where new energy vehicles may be battery electric vehicles, hybrid vehicles, or range-extended vehicles; spacecraft include airplanes, rockets, space shuttles, and spaceships; electric toys include fixed or mobile electric toys, such as game consoles, electric car toys, electric ship toys, and electric airplane toys; and electric tools include electric metal cutting tools, electric grinding tools, electric assembly tools, and electric railway tools, such as electric drills, electric grinders, electric wrenches, electric screwdrivers, electric hammers, impact drills, concrete vibrators, and electric planers.

For convenience of explanation, an example in which the electric device is a vehicle 1000 is used for description in the following embodiments.

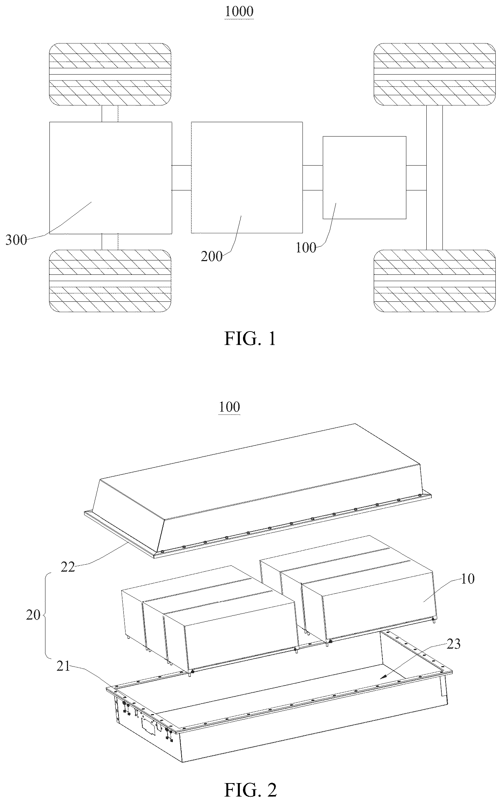

Referring to FIG. 1, FIG. 1 is a schematic structural diagram of a vehicle 1000 according to some embodiments of this application. The vehicle 1000 is internally provided with a battery 100. The battery 100 may be disposed at the bottom, front, or rear of the vehicle 1000. The battery 100 may be configured to supply power to the vehicle 1000, for example, the battery 100 may serve as an operational power source of the vehicle 1000.

The vehicle 1000 may further include a controller 300 and a motor 200, where the controller 300 is configured to control the battery 100 to supply power to the motor 200, for example, for the operational power requirements during start, navigation, and driving of the vehicle 1000.

In some embodiments of this application, the battery 100 may serve as not only the operational power source of the vehicle 1000 but also a driving power source of the vehicle 1000, replacing or partially replacing fuel or natural gas to provide driving power for the vehicle 1000.

In some embodiments, referring to FIG. 2, FIG. 2 is schematic structural exploded view of a battery 100 according to some embodiments of this application. The battery 100 includes multiple battery cells 10. The multiple battery cells 10 may be connected in series, parallel, or series-parallel. Being connected in series-parallel refers to a combination of both a series connection and a parallel connection of the multiple battery cells 10.

In some embodiments, the battery 100 may further include a busbar component (not shown in FIG. 2), and the multiple battery cells 10 may be electrically connected through the busbar component to achieve series connection, parallel connection, or series-parallel connection of the multiple battery cells 10.

The busbar component may be a metal conductor, such as copper, iron, aluminum, steel, or aluminum alloy.

In some embodiments, the battery 100 may further include a box 20, and the box 20 is configured to accommodate the battery cells 10. The box 20 may include a first sub-box 21 and a second sub-box 22, where the first sub-box 21 and the second sub-box 22 cover each other to define an accommodation space 23 for accommodating the battery cells 10. Certainly, a joint between the first sub-box 21 and the second sub-box 22 may be sealed by a sealing element (not shown in the figure), and the sealing element may be a sealing ring, a sealant, or the like.

The first sub-box 21 and the second sub-box 22 may have various shapes, such as a cuboid shape or a cylindrical shape. The first sub-box 21 may be a hollow structure with one side open, the second sub-box 22 may also be a hollow structure with one side open, and the open side of the second sub-box 22 covers the open side of the first sub-box 21 to form the box 20 with the accommodation space 23. Alternatively, the first sub-box 21 may be a hollow structure with one side open, the second sub-box 22 may be a plate-like structure, and the second sub-box 22 covers the open side of the first sub-box 21 to form the box 20 with the accommodation space 23.

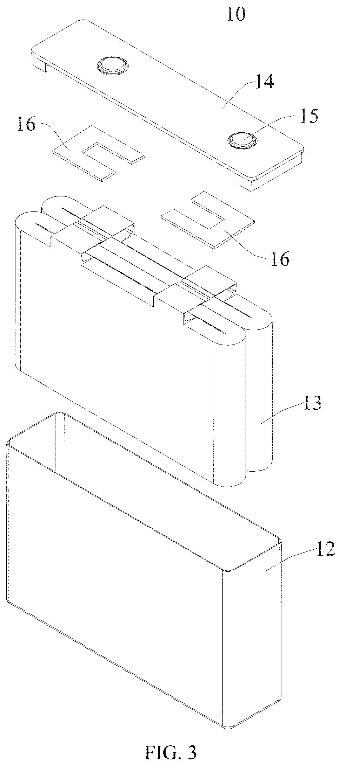

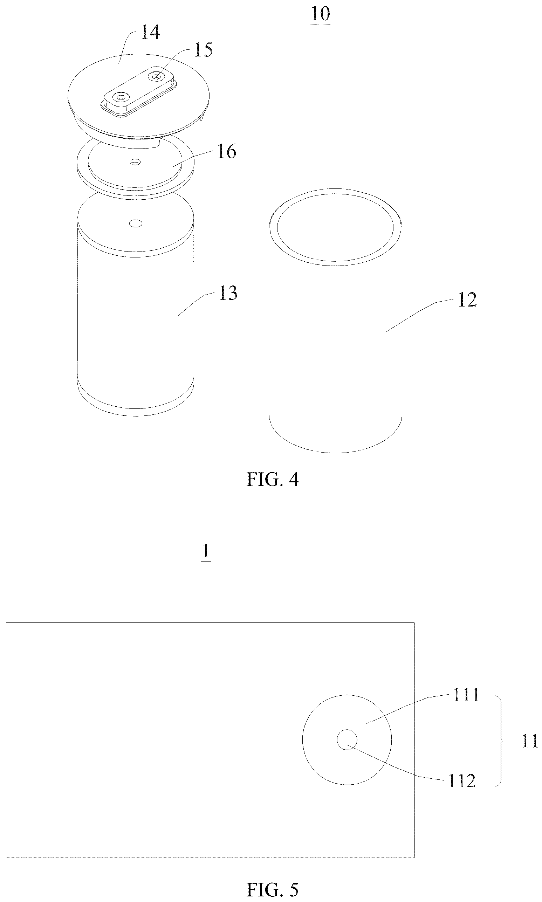

Referring to FIG. 3 and FIG. 4, FIG. 3 is schematic structural exploded view of a battery cell 10 according to some embodiments of this application, and FIG. 4 is schematic structural exploded view of a battery cell 10 according to some other embodiments of this application. The battery cell 10 is the smallest unit constituting the battery 100. The battery cell 10 may include a housing 12, an electrode assembly 13, a current collecting member 16, and an end cover 14. The end cover 14 may be provided with functional components such as an electrode terminal 15. The electrode terminal 15 is electrically connected to a tab through the current collecting member 16. The housing 12 is a component for accommodating the electrode assembly 13, and the housing 12 may be a hollow structure with an opening at one end, or the housing 12 may be a hollow structure with openings at both ends. The housing 12 may be made of various materials, such as copper, iron, aluminum, steel, or aluminum alloy. The housing 12 may have various shapes, such as a cylindrical shape or a cuboid shape. For example, in FIG. 3, the housing 12 is a cuboid.

The end cover 14 is a component that covers the opening of the housing 12 to isolate the internal environment of the battery cell 10 from the external environment. The end cover 14 covers the opening of the housing 12, and the end cover 14 and the housing 12 jointly define a sealed space for accommodating the electrode assembly 13, an electrolyte, and other functional components. The shape of the end cover 14 may be adapted to the shape of the housing 12. As shown in FIG. 3, the housing 12 is a cuboid structure, and the end cover 14 is a rectangular plate-like structure adapted to the housing 12. As shown in FIG. 4, the housing 12 is a cylindrical structure, and the end cover 14 is a circular plate-like structure adapted to the housing 12. The end cover 14 may also be made of various materials, for example, the end cover 14 may be made of a metal material, such as copper, iron, aluminum, steel, or aluminum alloy. The material of the end cover 14 may be the same as or different from the material of the housing 12.

In the battery cell 10, there may be one or two end covers 14. If the housing 12 is a hollow structure with an opening at one end, one end cover 14 is provided correspondingly; if the housing 12 is a hollow structure with openings at both ends, two end covers 14 are provided correspondingly, where the two end covers 14 cover the two openings of the housing 12, respectively.

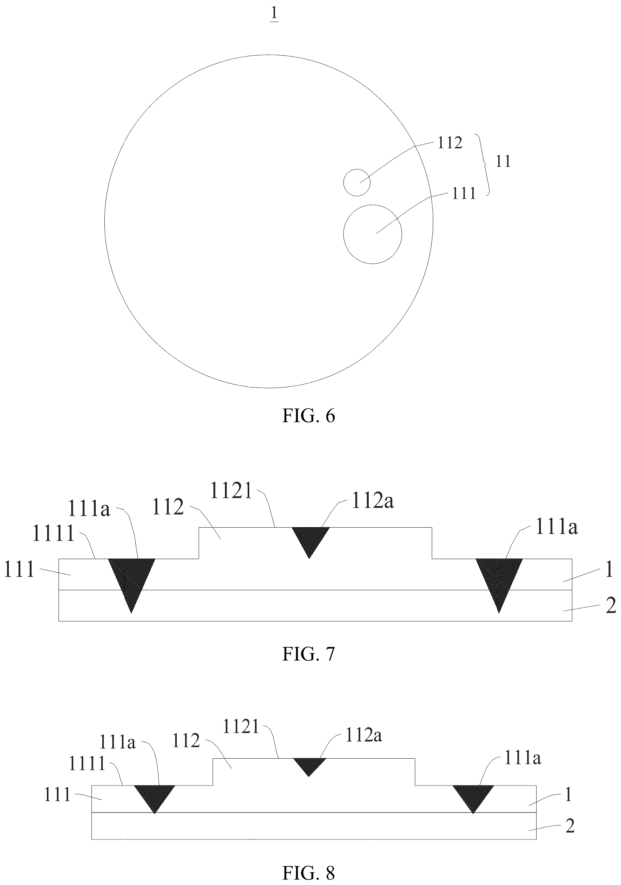

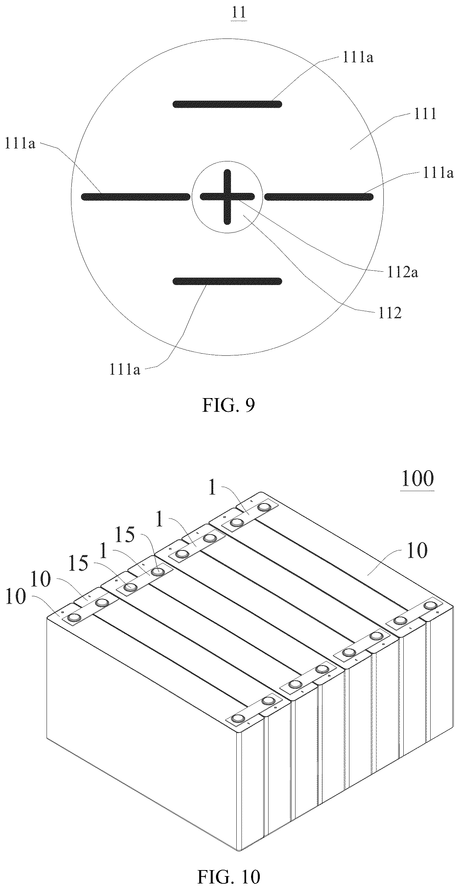

Referring to FIG. 5 to FIG. 9, FIG. 5 is a schematic structural diagram of a structural member 1 according to some embodiments of this application; FIG. 6 is a schematic structural diagram of a structural member 1 according to some other embodiments of this application; FIG. 7 is a partial cross-sectional view of welding of a structural member 1 and a target member 2 according to some embodiments of this application; FIG. 8 is a partial cross-sectional view of incomplete welding of a structural member 1 and a target member 2 according to some embodiments of this application; and FIG. 9 is a schematic diagram of a weld mark formed through welding in a welding region 11 according to some embodiments of this application.

An embodiment of this application provides a structural member 1 for penetration welding. The structural member 1 includes a welding region 11 to be welded to a target member 2. The welding region 11 includes a first portion 111 and a second portion 112. The second portion 112 has a weaker ability to receive welding energy than the first portion 111, where the ability to receive welding energy refers to a depth of a weld penetration formed at a welding site.

Penetration welding includes arc welding, laser welding, and the like. During penetration welding, the target member 2 and the structural member 1 are stacked, and an energy source forms a small hole extending through the structural member 1 on a surface of the structural member 1 to fuse the structural member 1 with the target member 2, forming a weld mark at the welding site.

A component to be welded to the structural member 1 is the target member 2. The structural member 1 may be any component that needs to be welded to the target member 2, that is, the structural member 1 provided in this embodiment may be used in any structure involving the welding of two components. For example, the structural member 1 may serve as the housing 12, electrode terminal 15, busbar component, current collecting member 16, or the like of a battery cell 10.

A region of the structural member 1 to be welded to the target member 2 is the welding region 11. The welding region may be a part of the structural member 1 (as shown in FIG. 5). Certainly, the entire structural member 1 may alternatively be a weldable welding region 11.

The structural member 1 may have various shapes, such as a rectangular shape, a circular shape, a polygonal shape, or an elliptical shape. The welding region 11 may also have various shapes, such as a regular rectangular shape, a circular shape, a polygonal shape, or an elliptical shape. Certainly, the welding region 11 may alternatively have an irregular shape.

Both the first portion 111 and the second portion 112 are weldable welding regions 11. The energy actually received by the welding region 11 is different from the welding energy actually provided by a welding device, where the welding energy actually received by the welding region 11 is less than the welding energy actually provided by the welding device. The ability of the welding region 11 to receive welding energy is the main factor affecting the welding energy actually received by the welding region 11. The weld penetration reflects the ability of the welding region to receive welding energy. Specifically, when the same welding energy is provided for welding, a stronger ability to receive welding energy results in a deeper weld penetration of a weld mark formed at the welding site; and a weaker ability to receive welding energy results in a shallower weld penetration of a weld mark formed at the welding site. Sufficient weld penetration is required for penetration welding (as shown in FIG. 7). When the weld penetration is less than a thickness of the welding position, it indicates that the structural member 1 has not achieved penetration welding, resulting in incomplete welding or poor welding quality (as shown in FIG. 8).

The second portion 112 has a weaker ability to receive welding energy than the first portion 111, meaning that when the same welding energy is provided, the weld penetration formed through welding in the second portion 112 is less than the weld penetration formed through welding in the second portion 112.

Weld penetration refers to a distance between the deepest position of the welding site and the surface of the welding site, that is, a depth of the weld mark. Specifically, reference is made to FIG. 9, which is a schematic diagram of a weld mark formed through welding in a welding region 11 according to some embodiments of this application. The first portion 111 has a first surface 1111 configured to receive welding energy, and the second portion 112 has a second surface 1121 configured to receive welding energy. A first weld mark 111a is formed through welding on the first surface 1111, and a second weld mark 112a is formed through welding on the second surface 1121. A distance from the deepest position of the first weld mark 111a to the first surface 1111 is the weld penetration of the first weld mark 111a, and a distance from the deepest position of the second weld mark 112a to the second surface 1121 is the weld penetration of the first weld mark 111a. It should be noted that the distance by which the first weld mark 111a exceeds the first surface 1111 and the distance by which the second weld mark 112a exceeds the second surface 1121 are both minimal, so that influences of the weld marks on the thicknesses of the first portion 111 and the second portion 112 can be neglected.

If only the first portion 111 is present and welding is performed directly on the first portion 111, the weld penetration formed in the first portion 111 is deeper, enabling high welding quality of the first portion 111. However, a rapid temperature rise makes the structural member 1 prone to deformation and cracking. If the provided welding energy is directly reduced, although the risk of deformation and cracking of the structural member 1 is mitigated, the weaker ability of the first portion 111 to receive welding energy results in a shallower weld penetration formed by the first portion 111, affecting the welding quality.

Therefore, the second portion 112 has a weaker ability to receive welding energy than the first portion 111. When the structural member 1 is to be connected to the target member 2, welding is first performed on the second portion 112, followed by welding on the first portion 111. Since the second portion 112 has a weaker ability to receive welding energy than the first portion 111, the second portion is heated slowly, so the structural member 1 is less likely to deform during welding of the second portion 112. Additionally, due to heat transfer, the first portion 111 can have a specific initial temperature, which mitigates a rapid temperature rise during welding of the first portion, thereby reducing the risk of deformation and cracking of the structural member 1.

In this embodiment, the second portion 112 has a weaker ability to receive welding energy than the first portion 111. With this configuration, the second portion 112 can be used to preheat the first portion 111, the first portion 111 achieves effective welding, and the structural member 1 is less likely to deform when welded to the target member 2 and exhibits high welding quality.

In addition to the above technical effects, the structural member 1 provided in this embodiment can also serve as an intermediate product. This intermediate product is between a raw material and a standard product, where the standard product refers to a product capable of identifying the welding quality based on the color in appearance. The structural member 1 helps to reduce the preparation difficulty of the standard product.

Specifically, in a penetration welding process, the stability of the provided welding energy is insufficient, easily leading to incomplete welding. For example, incomplete welding between the current collecting member 16 and an electrode pole affects current flow, impacting electrical connection stability. Incomplete welding results in a larger contact resistance between the current collecting member 16 and a tab of the electrode assembly 13, leading to a higher charge/discharge rate of the battery cell 10, which is detrimental to improving the use performance of the battery cell 10. In addition, during use, localized overcurrent is likely to occur between an adapter and the tab of the electrode assembly 13, posing a risk of internal temperature rise in the battery cell 10, which is detrimental to improving the use safety of the battery cell. Therefore, incomplete welding seriously threatens the reliability of the battery cell, and during production, battery cells 10 with incomplete welding must be detected and removed promptly so as not to be brought to a subsequent process to cause potential hazards.

In a penetration welding process, materials to be welded are stacked and divided into an upper layer material and a lower layer material. A weld seam formed by penetration welding is on the surface of the upper layer material and has a specific thickness, and changes in input welding energy affect a depth of a weld penetration (a higher welding energy density results in a deeper weld penetration, and a lower welding energy density results in a shallower weld penetration). When the welding energy provided by a welding device is insufficient, or the welding energy is affected by external conditions, the welding energy for the upper layer material is reduced, the weld penetration is insufficient, and the upper layer material is not connected to the lower layer material, resulting in incomplete welding. Incomplete welding cannot be easily identified based on appearance. In related technologies, detection of welding quality requires auxiliary testing instruments, and detection methods are complex, time-consuming, and inefficient.

Therefore, there is a need to provide a structural member capable of identifying incomplete welding based on the appearance, simplifying an incomplete welding identification process.

In some other related welding technologies, a characteristic of penetration welding is that a weld penetration of a weld mark formed after welding corresponds to different colors at different stages (the color of the weld mark typically exhibits gradient changes). In an example in which the adapter is made of a copper material, after penetration welding, when a weld penetration of a weld mark exceeds 0.4 mm, the weld mark exhibits bright white, and when the weld penetration of the weld mark is below 0.4 mm, the weld mark exhibits dark purple, where 0.4 mm is a critical point of a gradient color change of the weld mark. This dark purple color, as a predetermined color, can serve as a basis for determining whether incomplete welding exists. Therefore, preparing, based on the above color change characteristic, a structural member capable of identifying incomplete welding based on the appearance, has become a research direction.

However, the ability of a welding surface to receive welding energy affects the depth of the weld penetration, and the ability of the welding surface to receive welding energy is affected by various factors, such as roughness, welding energy absorption ability, and thickness. For these reasons, the critical point of the gradient color change of different components is unknown, making it impossible to directly produce a standard product having specific specifications and capable of identifying incomplete welding based on the appearance from raw materials, causing a difficulty in the preparation of standard products. Therefore, how to reduce the preparation difficulty has become a challenging issue.

The structural member 1 provided in this embodiment can serve as an intermediate product. The preparation of this intermediate product facilitates further adjustments to the ability of the second portion 112 to receive welding energy (specific adjustment methods are mentioned hereinafter) based on this intermediate product in a later period until, when the first portion 111 and the second portion 112 are welded with the same welding energy, the weld penetration of the weld mark formed in the first portion 111 is equal to the thickness of the first portion 111, and the weld penetration of the weld mark formed in the second portion 112 is at the critical point of the gradient color change. Thus, the second portion 112 can be used to identify incomplete welding and welding quality after welding, and the first portion 111 is used to achieve reliable welding with the target member 2, to obtain a structural member 1 (standard product) capable of identifying welding quality based on the appearance. Therefore, the structural member 1 reduces the preparation difficulty of the standard product to some extent.

The structural member 1 in a standard product state is welded to the target member 2. Since the structural member 1 in the standard product state has the characteristic that "when welded with the same welding energy, the weld penetration of the weld mark formed in the second portion 112 is at the critical point of a gradient color change, and this welding energy is just sufficient to achieve penetration welding of the structural member 1", when the weld penetration is at two sides of the critical point, the weld mark will exhibit a first color and a second color. In an example in which the weld penetration corresponding to the first color is less than the weld penetration corresponding to the second color, after the standard product is welded to the target member 2, if the second portion 112 exhibits the first color, it can be inferred that the weld penetration of the first weld mark 111a is less than the thickness of the first portion 111, indicating incomplete welding and poor welding quality of the first portion 111.

The determining principle is as follows: when the welding energy is sufficient, the weld penetration of the first weld mark 111a is greater than the thickness of the first portion 111, and the color of the second weld mark 112a exceeds the critical point and the second weld mark 112a exhibits the second color, where the second color indicates good welding between the structural member 1 and the target member 2 in the first portion 111.

When the provided welding energy is insufficient due to the influence of external conditions, the weld penetration of the first weld mark 111a is less than the thickness of the first portion 111 (incomplete welding or poor welding quality), the weld penetration of the second weld mark 112a also decreases, and the decrease degree is greater than the weld penetration of the first weld mark 111a. The color of the second weld mark 112a exceeds the critical point and the second weld mark 112a exhibits the first color, and the occurrence of the first color indicates incomplete welding between the structural member 1 and the target member 2 in the first portion 111. The first color is used as the predetermined color for determining the welding quality, and when the weld mark of the second portion 112 exhibits the predetermined color, it can be inferred that the weld mark formed in the first portion 111 is less than the thickness of the first portion 111, indicating incomplete welding or poor penetration welding quality.

Based on the above principle, the structural member 1 provided in this embodiment of this application can serve as an intermediate product, facilitating the preparation of a standard product, and this standard product is capable of identifying welding quality based on the appearance, thereby improving the production efficiency.

Some embodiments are provided below, in which the second portion 112 has a weaker ability to receive welding energy than the first portion 111.

Referring to FIG. 7, in some embodiments, the first portion 111 has a first surface 1111 configured to receive welding energy, and the second portion 112 protrudes from the first surface 1111.

When the target member 2 and the structural member 1 are stacked, a surface of the first portion 111 facing away from the target member 2 is the first surface 1111, the first surface 1111 is configured to receive welding energy, and the first weld mark 111a is formed on the first surface 1111. Correspondingly, the second portion 112 has a second surface 1121 configured to receive welding energy. The second surface 1121 affects the ability of the second portion 112 to receive welding energy.

The second portion 112 may partially protrude from the first surface 1111 or entirely protrude from the first surface 1111. The thickness of the second portion 112 is greater than the thickness of the first portion 111.

According to the characteristics of laser welding, laser welding typically requires a certain defocus amount. The defocus amount affects the size of a spot area formed by laser, and a larger spot area formed in the welding region 11 results in weaker welding energy per unit area of the welding region 11.

For positive defocus, when a surface of the second portion 112 receiving welding energy is closer to a laser source, a spot area formed on the surface is larger, the welding energy per unit area of the surface is weaker, and the received energy is even weaker.

In the above embodiment, by increasing the thickness of the second portion 112, the ability of the second portion 112 to receive welding energy is weakened. Thus, when positive defocus welding is employed and a welding device provides the same welding energy, the surface of the second portion 112 receiving welding energy is closer to the laser source than the first surface 1111, a spot area formed on the second surface 1121 is larger than a spot area formed on the first surface 1111, the welding energy per unit area on the surface of the second portion 112 receiving the welding energy is weaker than the welding energy per unit area on the first surface 1111, and a weld penetration of the second weld mark 112a formed in the second portion 112 is less than a weld penetration of the first weld mark 111a formed in the first portion 111.

By increasing the thickness of the second portion 112 to weaken the ability of the second portion 112 to receive welding energy, the first portion 111 and the second portion 112 can be made of the same material, further reducing the preparation difficulty, facilitating production and manufacturing, and improving the production efficiency of the structural member 1.

In some other embodiments, the second portion 112 may alternatively be a groove. During welding, the second surface 1121 is farther from the laser source than the first surface 1111. The structural member 1 of this embodiment is applicable to laser welding using positive defocus. When negative defocus welding is employed, if the second surface 1121 is farther from the laser source, the spot area acting on the welding region 11 is larger, and the welding energy per unit area of the second surface 1121 is weaker. In these embodiments, using a groove to weaken the ability of the second surface 1121 to receive welding energy is applicable to positive defocus welding.

The first portion has a first surface 1111 configured to receive welding energy, the second portion 112 includes a second surface 1121 configured to receive welding energy, and a roughness of the first surface 1111 is greater than a roughness of the second surface 1121.

It can be understood that the second surface 1121 is smoother than the first surface 1111, and the first surface 1111 is rougher than the second surface 1121.

When the first portion 111 is the same as a second material, a degree of the roughness of the first surface 1111 can be altered through indentation formation or laser treatment, while the second surface 1121 undergoes no treatment. Alternatively, both the first surface 1111 and the second surface 1121 are roughened, but the first surface 1111 is roughened to a higher extent.

Typically, when penetration welding is performed with the same welding energy power, a higher roughness of a workpiece to be welded results in a deeper weld penetration of a formed weld mark. A smaller roughness of the workpiece to be welded results in a weaker ability to receive welding energy and a shallower weld penetration of the formed weld mark.

Therefore, in the above embodiments, by making the roughness of the first surface 1111 greater than the roughness of the second surface 1121, the second portion 112 has a weaker ability to receive welding energy than the first portion 111.

In some embodiments, the second portion protrudes from the first surface 1111, and the roughness of the first surface 1111 is greater than the roughness of the second surface 1121.

In these embodiments, the structural member 1 is adjusted by increasing the thickness of the second portion and altering the roughness of the second portion 112, facilitating production and manufacturing. Additionally, the structural member 1 is also applicable to products imposing requirements on roughness.

In some embodiments, the first portion has a first surface 1111 configured to receive welding energy, the second portion 112 has a second surface 1121 configured to receive welding energy, an area of the first surface 1111 is S₁, an area of the second surface 1121 is S₂, and 0.1 ≤ S₂/S₁ ≤ 0.4.

When a total area of the welding region 11 is fixed, a larger area of the second surface 1121 results in a smaller area of the first surface 1111. Since the weld penetration of the weld mark formed in the second portion 112 is shallower, the second portion 112 serves to identify the welding quality after welding, and the second portion 112 affects the connection stability between the structural member 1 and the target member 2. Therefore, when 0.1 ≤ S₂/S₁ ≤ 0.4, a proportion of the second surface 1121 in the entire welding region 11 can be controlled within a specific range, such that the second portion 112 can be used to identify the welding quality after welding, with minimal impact on the connection stability between the structural member 1 and the target member 2.

In some embodiments, a welding energy absorption rate of the first portion is greater than a welding energy absorption rate of the second portion 112.

A higher welding energy absorption rate of the welding region 11 makes the welding energy absorbed more easily by a surface receiving the welding energy and results in a rapid temperature rise of the surface and a deeper weld penetration formed by material melting.

Different materials have different welding energy absorption rates. Taking steel, aluminum, and copper materials as examples, laser absorption rate of steel > laser absorption rate of aluminum > laser absorption rate of copper.

In the above embodiments, by making the welding energy absorption rate of the first portion 111 greater than the welding energy absorption rate of the second portion 112, the second portion 112 has a weaker ability to receive welding energy than the first portion 111.

Further, a material of the first portion includes at least one of steel, aluminum, nickel, or copper.

For example, if the material of the first portion 111 is steel, the second portion 112 is made of a material with a lower welding energy absorption rate than steel, such as aluminum, copper, or other materials; if the material of the first portion 111 is aluminum, the second portion 112 is made of a material with a lower welding energy absorption rate than aluminum, such as copper or other materials.

Certainly, the first portion 111 or the second portion 112 may be plated with a corresponding material to alter the welding energy absorption rate. For example, the first portion 111 is plated with a nickel-copper alloy to form the first surface 1111, while the second portion 112 is untreated pure copper.

Certainly, the first portion 111 and the second portion 112 may alternatively be made of an alloy material, as long as the welding energy absorption rate of the second portion 112 is less than the welding energy absorption rate of the first portion 111.

In the above embodiments, the materials are readily available, facilitating production.

In some embodiments, the material of the second portion includes one of copper or aluminum.

It should be understood that when the material of the second portion 112 is copper, the first portion 111 should be made of a material with a higher welding energy absorption rate than copper. When the material of the second portion 112 is aluminum, the first portion 111 should be made of a material with a higher welding energy absorption rate than aluminum.

In the above embodiments, the materials are readily available, facilitating production.

In some embodiments, the first portion surrounds a periphery of the second portion 112.

The first portion 111 and the second portion 112 may be concentric circles, and in this case, the center of the first portion 111 coincides with the center of the second portion 112. Certainly, the second portion 112 may alternatively be deviated from the first portion 111, in which case the center of the second portion 112 does not coincide with the center of the first portion 111.

The first portion 111 and the second portion 112 may alternatively be concentric rings, and the first portion 111 and the second portion 112 are spaced apart in a radial direction, in which case the first portion 111 also surrounds the periphery of the second portion 112.

Certainly, in other embodiments, the first portion 111 may be spaced apart from the second portion 112 (as shown in FIG. 6). In this spaced arrangement, the first portion 111 does not surround the periphery of the second portion 112, and the first portion 111 and the second portion 112 are independent of each other. Certainly, the first portion 111 and the second portion 112 may be adjacent to each other, that is, the first portion 111 is arranged immediately next to the second portion 112.

The first portion 111 surrounding the periphery of the second portion 112 facilitates production and manufacturing, and regions occupied by the first portion 111 and the second portion 112 are reduced, reducing occupation of size of the structural member 1.

In some embodiments, this application provides a battery cell 10. The battery cell 10 includes a target member 2 and the structural member 1 for penetration welding provided in the above embodiments, and the target member 2 is welded to the structural member 1.

Referring to FIG. 3 and FIG. 4, in some embodiments, the battery cell 10 includes an electrode terminal 15, a tab, and a current collecting member 16. The current collecting member 16 is configured to connect the electrode terminal 15 to the tab. Any two of the electrode terminal 15, the current collecting member 16, and the tab are respectively the target member 2 and the structural member 1.

The electrode terminal 15 is typically disposed on the end cover 14 of the battery cell 10, where one end of the electrode terminal 15 is connected to the tab of the electrode assembly 13 through the current collecting member 16 and the other end is connected to a component of an electric main body.

The current collecting member 16 may be an adapter in a prismatic battery cell 10 or a current collecting disc in a cylindrical battery 100. During assembly of the battery cell 10, the tab of the electrode assembly 13 is typically connected to the electrode terminal 15 through a current collecting disc or an adapter.

For example, the structural member 1 is the current collecting member 16, and the target member 2 is the tab. For another example, the structural member 1 is the current collecting member 16, and the target member 2 is the electrode terminal 15.

In related technologies, there are two types of battery cells 10. The first type is: two electrode terminals 15 are provided outside the housing 12 of the battery cell 10 as current output terminals; the electrode terminal 15 is configured to lead out an electrode; the electrode terminal 15 includes a positive electrode and a negative electrode; and the positive electrode and the negative electrode are respectively connected to a positive electrode tab and a negative electrode tab of the electrode assembly 13 through an adapter or a current collecting disc. In the battery cell 10 with this structure, the current collecting disc or adapter is welded to the tab. The second type is: to simplify the structure of the battery cell 10, a cover plate serves as an output terminal of the first electrode, the first electrode is led out through the cover plate, the first electrode is the positive electrode or the negative electrode, and the positive electrode or the negative electrode is directly connected to the positive electrode tab or negative electrode tab of the electrode assembly 13. The housing 12 serves as an output terminal of the second electrode, the second electrode is led out through the housing 12, the first electrode is the negative electrode or the positive electrode, and the housing 12 is directly electrically connected to the negative electrode tab or positive electrode tab of the electrode.

Therefore, in some embodiments, for the battery cell 10 with the first type of structure, the structural member 1 may serve as the current collecting member 16, the structural member 1 may be electrically connected to the electrode terminal 15 through penetration welding, and the structural member 1 may alternatively be electrically connected to the tab through penetration welding.

Certainly, in some other embodiments, for the battery cell 10 with the second type of structure, the structural member 1 may serve as the housing 12. In this case, the current collecting member 16 serves as an output terminal of the electrode, the second electrode is led out through the structural member 1, the first electrode is the negative electrode or the positive electrode, and the structural member 1 is directly welded to the negative electrode tab or the positive electrode tab of the electrode through penetration welding. It should be understood that the structural member 1 may be any component that needs to be welded to the target member 2, that is, the structural member 1 provided in these embodiments may be used in a structure involving the welding of two components. For example, the structural member 1 may be one of the tab of the electrode assembly 13, the electrode terminal 15, the busbar component, the current collecting member 16, or the housing 12 of the battery cell 10. For example, the structural member 1 is the tab, and the target member may be the electrode terminal 15.

The battery cell 10 using the above structural member 1 achieves higher production efficiency.

In some embodiments, this application further provides a battery 100, where the battery 100 includes the battery cell 10 provided in any of the above embodiments.

Referring to FIG. 10, FIG. 10 is a schematic structural diagram of a battery 100 according to some other embodiments of this application.

In some embodiments, this application further provides a battery 100, where the battery 100 includes the structural member 1 provided in any of the above embodiments and multiple battery cells 10, the battery cell 10 includes an electrode terminal 15, and the structural member 1 is welded to the electrode terminals 15 to achieve electrical connection of the multiple battery cells 10.

Multiple refers to two or more (including two).

Optionally, the structural member 1 is a busbar, also known as a busbar component or a busbar. The multiple battery cells 10 may be connected in series or parallel through the busbar to meet highcapacity requirements.

It should be noted that the battery cell 10 in these embodiments may further include the structural member 1 provided in the above embodiments.

The battery 100 using the structural member 1 provided in the above embodiments reduces, to some extent, the difficulty of preparing a battery 100 capable of identifying the welding quality of the busbar and the electrode terminal 15 based on the appearance.

In some embodiments, this application further provides an electric device. The electric device includes the battery cell 10 provided in the above embodiments, and/or the electric device includes the battery 100 provided in the above embodiments. The battery cell 10 or the battery 100 is configured to provide electrical energy to the vehicle 1000.

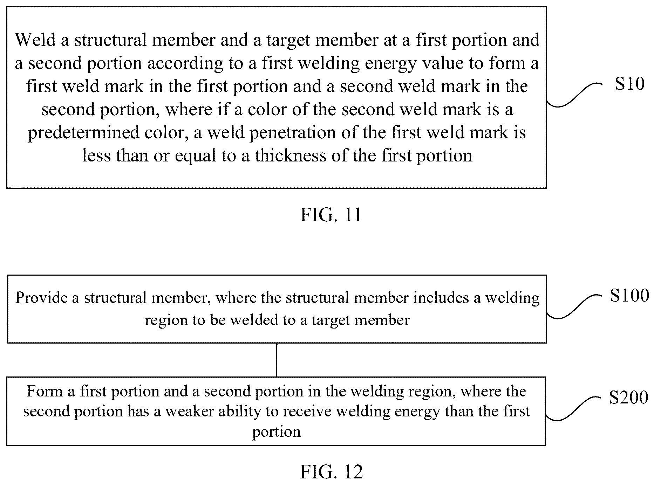

Referring to FIG. 11, FIG. 11 is a flowchart of a method for determining welding quality of a structural member 1 and a target member 2 according to some embodiments of this application.

An embodiment of this application further provides a method for determining welding quality of a structural member 1 and a target member 2. The structural member 1 includes a welding region 11 to be welded to the target member 2. The welding region 11 includes a first portion 111 and a second portion 112. The second portion 112 has a weaker ability to receive welding energy than the first portion 111, where the ability to receive welding energy refers to a depth of a weld penetration formed at a welding site. The determining method includes step S10: welding the structural member 1 and the target member 2 at the first portion 111 and the second portion 112 according to a first welding energy value to form a first weld mark 111a in the first portion 111 and a second weld mark 112a in the second portion 112, where if a color of the second weld mark 112a is a predetermined color, the weld penetration of the first weld mark 111a is less than or equal to a thickness of the first portion 111.

The predetermined color is a color preset based on the material characteristics of the second portion 112, which can be used to identify incomplete welding and determine the welding quality. Taking copper as an example, when the weld penetration of the second weld mark 112a is large, copper exhibits bright white; and when the weld penetration of the second weld mark 112a is small, the second weld mark 112a exhibits dark purple, where dark purple can be used as the predetermined color. That as soon as the color of the second weld mark 112a reaches the predetermined color means that the weld penetration of the second weld mark 112a is exactly at a critical point of a gradient color change where the weld mark transitions from bright white to dark purple.

If the color of the second weld mark 112a is the predetermined color, the weld penetration of the first weld mark 111a is less than or equal to the thickness of the first portion 111, indicating incomplete welding and poor welding quality.

It should be understood that the above determining method is used to determine the welding quality of the structural member 1 in a standard product state and the target member 2.

The method for determining welding quality of a structural member 1 and a target member 2 provided in this embodiment allows for the determination of welding quality by observing whether a predetermined color appears in the appearance, and the determining method is simple and highly effective.

Referring to FIG. 12, in conjunction with FIG. 9, FIG. 12 is a flowchart of a preparation method of a structural member 1 according to some embodiments of this application; FIG. 9 may represent a welding state of the structural member 1 and the target member 2 during adjustment of the structural member 1 in an intermediate product state or a welding state of the structural member 1 in a standard product state and the target member 2.

In some embodiments, this application further provides a preparation method of a structural member 1 for penetration welding, including the following steps.

S100: Provide a structural member 1, where the structural member 1 includes a welding region 11 to be welded to a target member 2.

S200: Form a first portion 111 and a second portion 112 in the welding region 11, where the second portion 112 has a weaker ability to receive welding energy than the first portion 111.

The manner in which the second portion 112 has a weaker ability to receive welding energy than the first portion 111 may mean that the second portion 112 protrudes from the first surface 1111, or a roughness of the first surface 1111 is greater than a roughness of the second surface 1121, or a welding energy absorption rate of the first surface 1111 is greater than a welding energy absorption rate of the second surface 1121.

It should be understood that the structural member 1 and target member obtained using the preparation method provided in these embodiments can achieve high welding quality, and the structural member is less likely to deform during welding. The structural member 1 may alternatively serve as an intermediate product, and this intermediate product is in a state between a raw material and a standard product (capable of identifying welding quality after welding). Further adjustment and processing of the structural member 1 in the intermediate state are required to obtain a standard product.

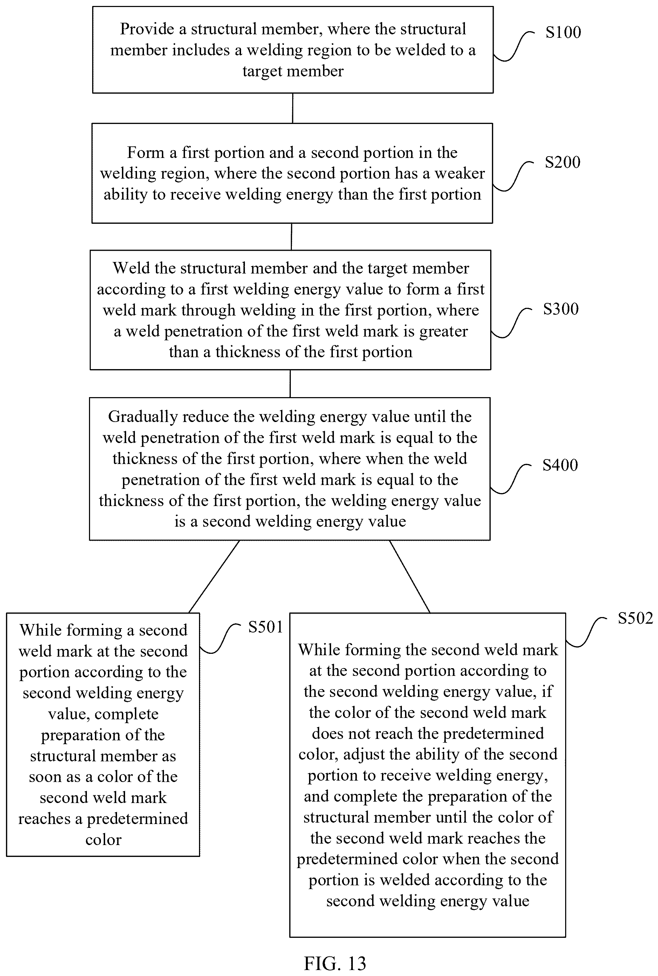

Referring to FIG. 13, FIG. 13 is a flowchart of a preparation method of a structural member 1 according to some other embodiments of this application.

In some embodiments, the preparation method of a structural member 1 for penetration welding further includes the following steps. Through the following steps, the intermediate product can be prepared into a standard product.

S300: Weld the structural member 1 and the target member 2 according to a first welding energy value to form a first weld mark 111a through welding in the first portion 111, where a weld penetration of the first weld mark 111a is greater than a thickness of the first portion 111. The first portion 111 can realize full penetration welding and be connected to the target member 2 through the first welding energy value, such that the structural member 1 is connected to the target member 2.

S400: Gradually reduce the welding energy value until the weld penetration of the first weld mark 111a is equal to the thickness of the first portion 111, where when the weld penetration of the first weld mark 111a is equal to the thickness of the first portion 111, the welding energy value is a second welding energy value. The weld penetration of the first weld mark 111a being equal to the thickness of the first portion 111 does not mean that the weld penetration and the thickness are strictly equal but allows for a certain error. The second welding energy value is just sufficient to realize penetration welding of the first portion 111.

Continue to perform the following determining step.

S501: While forming the second weld mark 112a at the second portion 112 according to the second welding energy value, complete the preparation of the structural member 1 as soon as a color of the second weld mark 112a reaches a predetermined color, where the obtained standard product is configured to identify the welding quality based on the appearance after the standard product is welded to another component.

S502: While forming the second weld mark 112a at the second portion 112 according to the second welding energy value, if the color of the second weld mark 112a does not reach the predetermined color, adjust the ability of the second portion 112 to receive welding energy, and complete the preparation of the structural member 1 as soon as the color of the second weld mark 112a reaches the predetermined color when the second portion 112 is welded according to the second welding energy value, where the obtained standard product is configured to identify the welding quality based on the appearance after being welded to another component.

Step S501 and step S502 are performed without a specific order.

The predetermined color is a color preset based on the material characteristics of the second portion 112, which can be used to identify incomplete welding and determine the welding quality. Taking copper as an example, when the weld penetration of the second weld mark 112a is large, copper exhibits bright white; and when the weld penetration of the second weld mark 112a is small, the second weld mark 112a exhibits dark purple, where dark purple can be used as the predetermined color. That as soon as the color of the second weld mark 112a reaches the predetermined color means that the weld penetration of the second weld mark 112a is exactly at a critical point of a gradient color change where the weld mark transitions from bright white to dark purple.

The essence of step S501 and step S502 is to determine whether the weld penetration of the second weld mark 112a formed according to the second energy value is exactly at the critical point of the gradient color change where the weld mark can transition from bright white to dark purple. If so, the standard product is obtained; if not, the ability of the second portion 112 to receive welding energy needs to be adjusted.

It should be understood that for the standard product, during the welding of the second portion 112 according to the second welding energy value, the weld penetration of the formed second weld mark 112a needs to be at the critical point of the gradient color change. Thus, if the welding energy value decreases due to external conditions, the second weld mark 112a will exceed the critical point and exhibit the predetermined color, achieving the identification of the welding quality based on the predetermined color in appearance.

During assembly, when the structural member 1 in the standard product state is connected and assembled with the target member 2 through penetration welding, if the second portion 112 reaches the predetermined color, it indicates that the product has incomplete welding or poor welding quality.

As soon as the second portion turning into the predetermined color means as soon as the predetermined color appears. That is, as long as a welding energy value greater than the second welding energy value is used, the second weld mark 112a will not exhibit the predetermined color.

That the color of the second weld mark 112a does not reach the predetermined color includes two cases. The first case is that when the second portion 112 is welded according to the second welding energy value, the second weld mark 112a does not exhibit the predetermined color, this case occurs because the second portion 112 has a strong ability to receive welding energy, and it is necessary to further weaken the ability of the second portion to receive welding energy to reduce the weld penetration of the formed second weld mark 112a, making the weld penetration approach the weld penetration at the critical point of the gradient color change of the second weld mark 112a until the weld penetration of the formed second weld mark 112a is at the critical point of the gradient color change. The second case is that when the second portion 112 is welded to form the second weld mark 112a according to the second welding energy value, the second weld mark 112a has already exhibited the predetermined color, this case occurs because the second portion 112 has a weak ability to receive welding energy, the weld penetration of the second weld mark 112a is below the critical point of the gradient color change of the second weld mark 112a, and it is necessary to enhance the ability of the second portion 112 to receive welding energy to increase the weld penetration of the formed second weld mark 112a, making the weld penetration approach the weld penetration depth at the critical point of the gradient color change of the weld mark until the weld penetration of the formed second weld mark 112a is at the critical point of the gradient color change.

It should be noted that each welding is completed, and the color of the second weld mark 112a refers to the color exhibited by the second weld mark 112a after a single welding is completed. After the ability of the second portion 112 to receive welding energy is adjusted, the welding action needs to be repeated to form the second weld mark 112a in the second portion 112 for verifying whether the second weld mark 112a just reaches the predetermined color. The entire process is a continuous repetition and verification process.

A standard product can be obtained through steps provided in the above embodiments. When the structural member 1 is put into use, welding the structural member 1 to the target member 2 according to welding energy greater than the second welding energy value can theoretically achieve good welding quality. If there is external interference, the actual welding energy is lower than the second welding energy value, and the second weld mark 112a of the second portion 112 will exhibit the predetermined color, where the predetermined color can serve as an identification color for identifying the welding quality. The first portion 111 serves to provide effective welding, that is, the first portion 111 is an effective welding region; and the second portion 112 serves to identify the welding quality after welding, that is, the second portion 112 is a welding quality identification region.

In some embodiments, a method for adjusting the ability of the second portion 112 to receive welding energy includes at least one of: changing a thickness of the second portion 112, changing a laser absorption rate of the second portion 112, or changing a roughness of the second portion 112.

It can be understood that one of the three methods-changing the thickness of the second portion 112, changing the laser absorption rate of the second portion 112, or changing the roughness of the second portion 112-can be selected to enhance or weaken the ability of the second portion 112 to receive welding energy. Alternatively, two of these methods or all three methods may be used.

An embodiment of this application further provides a structural member 1 for penetration welding. The structural member 1 includes a welding region 11 to be welded to a target member 2. The welding region 11 includes a first portion 111 and a second portion 112. The second portion 112 has a weaker ability to receive welding energy than the first portion 111, where the ability to receive welding energy refers to a depth of a weld penetration formed at a welding site. The first portion 111 surrounds a periphery of the second portion 112, the first portion 111 has a first surface 1111 configured to receive welding energy, and the second portion 112 protrudes from the first surface 1111.

An embodiment of this application further provides a structural member 1 for penetration welding. The structural member 1 includes a welding region 11 to be welded to a target member 2. The welding region 11 includes a first portion 111 and a second portion 112. The second portion 112 has a weaker ability to receive welding energy than the first portion 111, where the ability to receive welding energy refers to a depth of a weld penetration formed at a welding site. The first portion 111 surrounds a periphery of the second portion 112, the first portion 111 has a first surface 1111 configured to receive welding energy, the second portion 112 includes a second surface 1121 configured to receive welding energy, and a roughness of the first surface 1111 is greater than a roughness of the second surface 1121.

An embodiment of this application further provides a structural member 1 for penetration welding. The structural member 1 includes a welding region 11 to be welded to a target member 2. The welding region 11 includes a first portion 111 and a second portion 112. The second portion 112 has a weaker ability to receive welding energy than the first portion 111, where the ability to receive welding energy refers to a depth of a weld penetration formed at a welding site. The first portion 111 surrounds a periphery of the second portion 112. A welding energy absorption rate of the first portion 111 is greater than a welding energy absorption rate of the second portion 112.

It should be noted that the method for adjusting the ability of the second portion 112 to receive welding energy provided in this embodiment implements adjustment on the basis of the intermediate product, so as to prepare the intermediate product into a standard product.

It should be noted that, without conflict, the embodiments and the features in the embodiments of this application can be combined with each other.

The above embodiments are only used to illustrate the technical solutions of this application and are not intended to limit this application. For those skilled in the art, this application may have various modifications and variations. Any modifications, equivalent substitutions, improvements, and the like made within the spirit and principles of this application should be included within the scope of protection of this application.

## Claims

1. A structural member for penetration welding, comprising a welding region to be welded to a target member, wherein the welding region comprises a first portion and a second portion, wherein the second portion has a weaker ability to receive welding energy than the first portion, wherein the ability to receive welding energy refers to a depth of a depth of weld penetration formed at a welding site.

2. The structural member for penetration welding according to claim 1, wherein the first portion has a first surface configured to receive welding energy, and the second portion protrudes from the first surface.

3. The structural member for penetration welding according to claim 1 or 2, wherein the first portion has a first surface configured to receive welding energy, the second portion comprises a second surface configured to receive welding energy, and a roughness of the first surface is greater than a roughness of the second surface.

4. The structural member for penetration welding according to claim 3, wherein the second portion protrudes from the first surface.

5. The structural member for penetration welding according to any one of claims 1 to 4, wherein the first portion has a first surface configured to receive welding energy, the second portion has a second surface configured to receive welding energy, an area of the first surface is S₁, an area of the second surface is S₂, and 0.1 ≤ S₂/S₁ ≤ 0.4.

6. The structural member for penetration welding according to any one of claims 1 to 4, wherein a welding energy absorption rate of the first portion is greater than a welding energy absorption rate of the second portion.

7. The structural member for penetration welding according to claim 6, wherein a material of the first portion comprises at least one of steel, aluminum, nickel, or copper.

8. The structural member for penetration welding according to claim 6, wherein a material of the second portion comprises one of copper or aluminum.

9. The structural member for penetration welding according to any one of claims 1 to 8, wherein the first portion surrounds a periphery of the second portion.

10. A battery cell, comprising:
the structural member according to any one of claims 1 to 9; and
a target member, wherein the target member is welded to the structural member.

11. The battery cell according to claim 10, wherein the battery cell comprises:
an electrode terminal;
a tab; and
a current collecting member configured to connect the electrode terminal to the tab,
wherein any two of the electrode terminal, the current collecting member, and the tab are respectively the target member and the structural member.

12. A battery, comprising the battery cell according to claim 10 or 11.

13. A battery, comprising:
multiple battery cells, wherein the battery cell comprises an electrode terminal; and
the structural member according to any one of claims 1 to 9, wherein the structural member is welded to the electrode terminals to achieve electrical connection of the multiple battery cells.

14. An electric device, comprising the battery cell according to claim 10 or 11, and/or comprising the battery according to claim 12 or 13, wherein the battery cell or the battery is configured to provide electrical energy.

15. A method for determining welding quality of a structural member and a target member, wherein the structural member comprises a welding region to be welded to the target member; the welding region comprises a first portion and a second portion, and the second portion has a weaker ability to receive welding energy than the first portion, wherein the ability to receive welding energy refers to a depth of weld penetration formed at a welding site, and the structural member and the target member are welded at the first portion and the second portion according to a first welding energy value to form a first weld mark in the first portion and a second weld mark in the second portion, wherein if a color of the second weld mark is a predetermined color, a depth of weld penetration of the first weld mark is less than or equal to a thickness of the first portion.

16. A preparation method of a structural member for penetration welding, comprising:
providing a structural member, wherein the structural member comprises a welding region to be welded to a target member; and
forming a first portion and a second portion in the welding region, wherein the second portion has a weaker ability to receive welding energy than the first portion.

17. The preparation method of a structural member for penetration welding according to claim 16, wherein the preparation method further comprises:
welding the structural member and the target member according to a first welding energy value to form a first weld mark through welding in the first portion, wherein a weld penetration of the first weld mark is greater than a thickness of the first portion;
gradually reducing the welding energy value until the weld penetration of the first weld mark is equal to the thickness of the first portion, wherein
when the weld penetration of the first weld mark is equal to the thickness of the first portion, the welding energy value is a second welding energy value;
while forming a second weld mark at the second portion according to the second welding energy value, if a color of the second weld mark (112a) reaches a predetermined color, completing the preparation of the structural member; and
while forming the second weld mark at the second portion according to the second welding energy value, if the color of the second weld mark does not reach the predetermined color, adjusting the ability of the second portion to receive welding energy; and completing the preparation of the structural member when the color of the second weld mark reaches the predetermined color while welding the second portion according to the second welding energy value.

18. The preparation method of a structural member for penetration welding according to claim 17, wherein a method for adjusting the ability of the second portion to receive welding energy comprises at least one of: changing a thickness of the second portion, changing a laser absorption rate of the second portion, or changing a roughness of the second portion.
